# FASCICULE DE BREVET EUROPEEN

(11) **EP 3 018 841 B1**
(45) Date de publication et mention de la délivrance du brevet: **04.01.2023**
(21) Numéro de dépôt: 15193241.5
(22) Date de dépôt: 05.11.2015
(51) Int. Cl.: H04B 15/04, H04B 1/12, B61L 15/00

(54) **DISPOSITIF DE COMMUNICATION POUR UN VÉHICULE FERROVIAIRE, VÉHICULE FERROVIAIRE ÉQUIPÉ D'UN TEL DISPOSITIF**
KOMMUNIKATIONSVORRICHTUNG FÜR EIN SCHIENENFAHRZEUG, UND MIT DIESER VORRICHTUNG AUSGESTATTETES SCHIENENFAHRZEUG
COMMUNICATION DEVICE FOR RAIL VEHICLE, RAIL VEHICLE EQUIPPED WITH SAID DEVICE

(30) Priorité: 07.11.2014 FR 1460775
(43) Date de publication de la demande: 11.05.2016
(73) Titulaire: ALSTOM Transport Technologies, 93400 Saint-Ouen (FR)
(72) Inventeur: FAYT, Etienne, 7020 Nimy (BE)
(74) Mandataire: Lavoix

(56) Documents cités:
- WO-A1-2006/127771
- US-A1- 2014 198 760

## Description

La présente invention concerne un dispositif de communication pour un véhicule ferroviaire, du type comprenant un étage de communication sans fil pour communiquer avec une balise dans au moins un canal de communication d'une plage spectrale subdivisée en plusieurs canaux prédéterminés.

Dans le domaine avionique, les documents WO 2006/127771 A1 et US2014/198760 A1 décrivent des systèmes permettant d'empêcher un téléphone portable à bord d'un avion de communiquer directement avec les stations de base d'une infrastructure de communication au sol, en générant un signal de brouillage sur l'ensemble de la bande de fréquence utilisée par les téléphones mobiles des passagers.

L'invention s'applique au domaine de la sécurité ferroviaire et plus particulièrement, mais non exclusivement, à la sécurité des transports métropolitains.

De façon classique, les véhicules ferroviaires sont équipés d'un étage de communication pour communiquer avec des balises disposées le long de la voie ferrée.

De telles balises permettent par exemple un contrôle en temps réel du trafic ferroviaire.

En outre, de telles balises permettent par exemple d'acheminer du contenu multimédia, en particulier des flux de vidéosurveillance, ou encore du contenu multimédia pour les passagers du véhicule ferroviaire.

La communication entre les balises et l'étage de communication a généralement pour support des ondes électromagnétiques radiofréquence, notamment des ondes dont la fréquence se trouve dans la bande 2400 MHz-2489,5 MHz ou au-delà de 5 GHz, en particulier dans les bandes 5250 MHz-5350 MHz et 5470 MHz-5725 MHz. De telles plages de fréquences ne sont généralement pas exclusivement allouées, et sont par exemple librement utilisées par des appareils mobiles grand public, tels que des téléphones portables, des tablettes ou encore des ordinateurs portables.

La présence de tels appareils mobiles en nombre important à bord d'une voiture d'un véhicule ferroviaire, notamment à proximité de l'étage de communication, par exemple durant les heures de pointe, peut perturber, voire interrompre la communication entre l'étage de communication et les balises. Les conditions de circulation en sécurité sont telles qu'en cas de rupture de la communication bord-sol, le véhicule ferroviaire doit s'immobiliser.

Ainsi, la perturbation par les terminaux des voyageurs de la communication bord-sol a notamment pour effet l'interruption momentanée de la circulation du véhicule ferroviaire, ce qui a pour conséquence de réduire la qualité de service offerte aux usagers.

Une telle perturbation a également pour effet de dégrader la qualité du flux de données multimédia à destination du véhicule ferroviaire, voire de causer l'interruption d'un un tel flux.

Un but de l'invention est de proposer un dispositif de communication permettant d'atteindre une meilleure fiabilité et une meilleure disponibilité de la communication bord-sol, notamment pour les dispositifs de communication ferroviaire opérant dans la bande de fréquence 5250 MHz à 5350 MHz ainsi que la bande de fréquence 5470 MHz à 5725MHz.

Les conditions d'utilisations de ces deux bandes de fréquences sont définies, en Europe, par la norme ETSI EN 301 893 (par exemple dans sa version actuelle portant la référence V 1.7.2 publiée en juillet 2014) et, dans d'autres parties du monde, par des standards similaires.

A cet effet, l'invention a pour objet un dispositif de communication et un véhicule ferroviaire selon les revendications annexées.

En effet, les appareils tiers, tels que décrits précédemment, ne sont plus en mesure d'occuper les canaux sur lesquels l'étage de protection émet des signaux.

L'invention sera mieux comprise à l'aide de la description qui va suivre, donnée uniquement à titre d'exemple et faite en se référant aux dessins annexés sur lesquels :
- la figure 1 est un schéma d'un véhicule ferroviaire comprenant un exemple d'un mode de réalisation d'un dispositif de communication selon l'invention ;
- la figure 2 est une représentation schématique d'un étage de protection du dispositif de communication de la figure 1 ;
- la figure 3 est un spectre représentant schématiquement la puissance rayonnée dans certains canaux d'une plage spectrale, lorsque l'étage de protection du dispositif de communication de la figure 1 est inactif ;
- la figure 4 est un spectre analogue au spectre de la figure 3, donné lorsque l'étage de protection est actif.

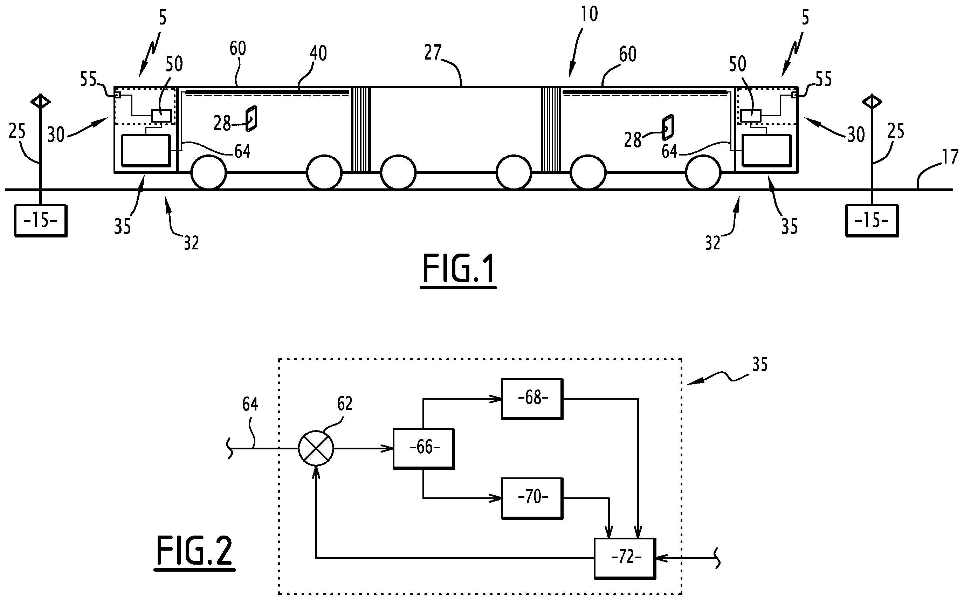

Le dispositif de communication 5 sans fil illustré par la figure 1 est disposé à bord d'un véhicule ferroviaire 10. Le dispositif de communication 5 est propre à communiquer sans contact avec des balises 15 disposées le long d'une voie ferrée 17 de circulation du véhicule ferroviaire 10. La communication entre le dispositif de communication 5 et les balises 15 se fait par voie aérienne par le biais d'antennes de balise 25.

Les balises 15 sont propres à fournir, au véhicule ferroviaire 10, des instructions relatives à la circulation dudit véhicule ferroviaire 10 sur la voie ferrée 17, par exemple des informations de signalisation.

En outre, les balises 15 sont propres à acheminer du contenu multimédia entre le dispositif de communication 5 et un poste informatique au sol. En particulier, les balises 15 sont propres à acheminer des flux de vidéosurveillance entre le véhicule ferroviaire 10 et le poste informatique au sol, ou encore du contenu multimédia pour des passagers du véhicule ferroviaire 10.

Les balises de communication 15 sont propres à communiquer avec le dispositif de communication 5 dans une plage spectrale prédéterminée, encore appelée « plage de communication ». De préférence, la plage de communication est subdivisée en une pluralité de canaux prédéterminés, les balises 15 et le dispositif de communication 5 étant propres à communiquer entre eux à une fréquence de communication appartenant à l'un au moins desdits canaux, encore appelé « canal de communication ».

De préférence, la plage de communication est une bande radiofréquence. La plage de communication est par exemple choisie parmi le groupe consistant en : la bande de 5250 MHz à 5350 MHz et la bande de 5470 MHz à 5725 MHz. Les conditions d'utilisation de telles bandes sont définies par la norme ETSI EN 301893.

La subdivision de la plage de communication en canaux est de préférence définie par la norme ETSI EN 301893 et la norme IEEE 802.11a, la norme ETSI EN 301893 définissant la fréquence centrale de chaque canal, et la norme IEEE 802.11a définissant la largeur de chaque canal. Dans les bandes 5250 MHz-5350 MHz et 5470 MHz-5725 MHz, les canaux présentent une largeur spectrale de 20 MHz. Les signaux de données échangés entre le dispositif de communication 5 et les balises de communication 15 occupent la totalité d'au moins un canal de la plage de communication, un canal présentant une largeur étendue de 20 MHz.

De préférence, le dispositif de communication 5 et les balises de communication 15 sont adaptés pour communiquer selon un protocole de communication dont les caractéristiques sont définies par l'une des normes IEEE 802.11, de préférence la norme IEEE 802.11a, de préférence encore dans sa version référencée 1999, révisée en juin 2003.

Le véhicule ferroviaire 10 comporte des voitures 27 pour accueillir des passagers. Certains des passagers des voitures 27 utilisent des appareils mobiles de communication 28 propres à fonctionner dans la même bande de fréquence que le dispositif de communication 5.

Le dispositif de communication 5 comporte un étage de communication 30. Le dispositif de communication 5 comporte également des moyens de protection 32 comprenant un étage de protection 35 et une antenne de protection 40.

L'étage de protection 35 est relié à l'étage de communication 30. L'étage de protection 35 est en outre électriquement connecté à l'antenne de protection 40.

L'étage de communication 30 comporte un module d'émission-réception 50 et une antenne de communication 55.

Le module d'émission-réception 50 est propre à communiquer avec les balises 15 via l'antenne de communication 55, par propagation libre entre l'antenne de communication 50 et les antennes de balise 25. En particulier, le module d'émission-réception 50 est propre à communiquer avec les balises 15 via des signaux dont le spectre est compris dans un canal de communication tel que défini ci-dessus.

En variante, les balises 15 sont dépourvues d'antenne et sont chacune associée à au moins un guide d'onde disposé à proximité de la voie ferrée 17. Le module d'émission-réception 50 est alors propre à communiquer avec les balises 15 via l'antenne de communication 55, par couplage électromagnétique entre l'antenne de communication 55 et chaque guide d'onde.

L'étage de communication 30 est propre à transmettre à l'étage de protection 35 des informations relatives au canal de communication prédéterminé qui est employé pour la communication du module d'émission-réception 50 avec les balises 15.

En variante, chaque balise 15 définit une cellule associée à un canal de communication prédéterminé, deux cellules successives étant associées à des canaux de communication différents. L'étage de communication 30 est alors propre à communiquer avec les balises 15 dans chacun des canaux de communication correspondants. Ainsi, au cours de la progression du véhicule ferroviaire 10 le long de la voie ferrée 17, l'étage de communication 30 communique successivement avec chaque balise 15 dans le canal de communication correspondant. L'étage de communication 30 transmet alors à l'étage de protection 35, en temps réel, des informations relatives au canal de communication employé à l'instant courant, pour la communication de l'étage de communication 30 avec les balises 15.

En outre, l'étage de communication 30 est propre à transmettre à l'étage de protection 35 des informations relatives à l'adresse MAC du module d'émission-réception 50.

L'antenne de protection 40 est disposée dans une voiture d'extrémité 60 du véhicule ferroviaire 10.

L'antenne de protection 40 est par exemple un câble coaxial dont le blindage a été altéré pour permettre, en émission, au câble de rayonner sous forme d'ondes radioélectriques, une partie des signaux électriques qui lui sont appliqués, et, en réception, au câble de transformer une partie des ondes captées, en signaux électriques.

L'antenne 40 est de préférence propre à rayonner des signaux en direction principalement des voitures d'extrémité 60 du véhicule ferroviaire, situées au voisinage du point d'implantation du dispositif de communication 5 à bord du véhicule ferroviaire 10.

L'antenne de protection 40 est également propre à capter des ondes électriques qui se propagent dans la voiture d'extrémité 60 et à transmettre, à destination de l'étage de protection 35, un signal électrique correspondant aux ondes captées, encore appelé « signal capté ».

Comme illustré par la figure 2, l'étage de protection 35 comporte un coupleur d'émission/réception 62 connecté par une liaison électrique non rayonnante 64 à l'antenne de protection 40.

L'étage de protection 35 comporte, en aval du coupleur 62 fonctionnant en réception, un module de réception 66 propre à recevoir un signal capté provenant de l'antenne de protection 40.

L'étage de protection 35 comporte un module de détection 68, en aval du module de réception 66, propre à détecter la fréquence du signal reçu.

L'étage de protection 35 comporte un module d'identification 70, en aval du module de détection 68, propre à détecter l'adresse MAC associée à un signal reçu dont la fréquence se situe dans la bande de communication du dispositif de communication 5.

L'étage de protection 35 comporte un module de brouillage 72 relié au coupleur fonctionnant en émission. Le module de brouillage 72 est propre à générer un signal radar, encore appelé « signal de brouillage », dont la fréquence correspond au canal de communication actuellement utilisé par l'étage de communication 30. Par « signal de brouillage », on entend au sens de la présente demande un signal radioélectrique pour les applications radar tel que décrit dans les normes régissant l'allocation des ressources hertziennes dans la bande de communication considérée. De tels signaux radars sont par exemple des signaux radars pour des applications militaires. Par exemple, en Europe, de tes signaux radars sont décrits dans la norme ETSI EN 301893. En particulier, l'étage de protection 35 est propre à émettre un signal de brouillage présentant un spectre compris dans le canal de communication.

Le module de brouillage 72 est relié au module de détection 68 et au module d'identification 70 pour recevoir la fréquence du signal reçu et l'adresse MAC détectée respectivement.

Le module de brouillage 72 est en outre relié à l'étage de communication 30 pour recevoir l'adresse MAC du module d'émission-réception 50 et des informations relatives au canal de communication courant.

De préférence, le module de brouillage 72 est propre à générer le signal de brouillage si la fréquence du signal capté appartient au canal de communication et si l'adresse MAC de l'appareil qui a émis l'onde correspondant audit signal capté est différente de l'adresse MAC du module d'émission-réception 50.

En variante, le module de brouillage 72 est propre à générer le signal de brouillage uniquement si la fréquence du signal capté appartient au canal de communication.

Dans encore une autre variante, le module de brouillage 72 est propre à générer le signal de brouillage pendant une période de temps précédent l'utilisation du canal de communication par le dispositif de communication 5.

En outre, le coupleur 62 est propre à appliquer le signal de brouillage, via la liaison non-rayonnante 64, à l'antenne de protection 40, l'antenne de protection 40 étant alors propre à rayonner une partie du signal de brouillage dans la voiture d'extrémité 60.

De préférence, les moyens de protection 32 sont adaptés pour que les ondes correspondant au signal de brouillage et qui sont rayonnées par l'antenne de protection 40 présentent une puissance supérieure ou égale à -62 dBm à l'intérieur de la voiture 60.

En outre, les moyens de protection 32 sont adaptés pour que les ondes correspondant au signal de brouillage et qui sont rayonnées par l'antenne de protection 40 présentent une puissance inférieure ou égale à -70 dBm au niveau de l'antenne de communication 55 de l'étage de communication 30.

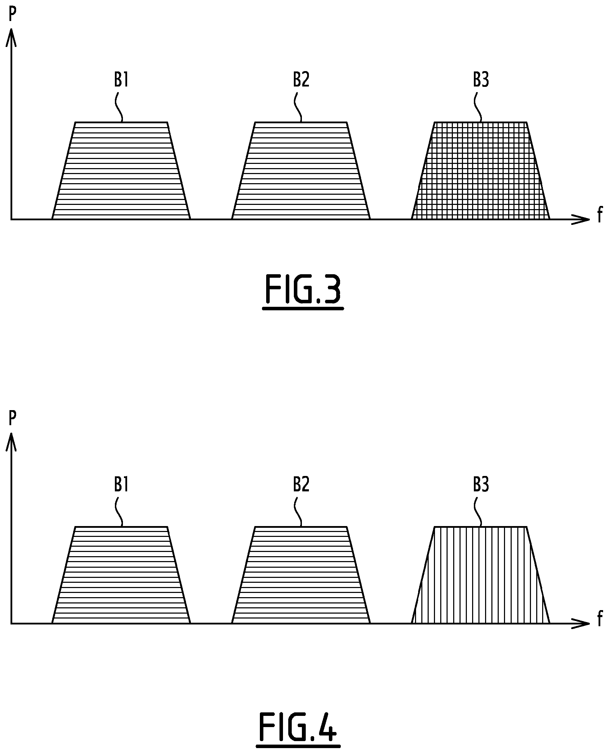

Le dispositif de communication 5 dont le fonctionnement est illustré par les figures 3 et 4 opère dans au moins une plage parmi les plages de fréquences 5250 MHz-5350 MHz et 5470 MHz-5725 MHz. Ces plages sont subdivisées en une pluralité de canaux prédéterminés conformément à la norme ETSI EN 301893 et à la norme IEEE 802.11a, la norme ETSI EN 301893 définissant la fréquence centrale de chaque canal, et la norme IEEE 802.11a définissant la largeur de chaque canal. Selon la norme IEEE 802.11a, les canaux présentent une largeur de 20 MHz.

L'étage de communication 30 est propre à émettre et recevoir des signaux dans un canal de communication prédéterminé B3, choisi parmi les canaux de la bande 5470 MHz-5725 MHz. Sur ces figures, les signaux échangés entre l'étage de communication 30 et les balises 15 sont représentés par des rayures verticales dans le domaine des fréquences.

Conformément à la norme IEEE 802.11a, les appareils mobiles 28 émettent dans une pluralité de canaux, par exemple un premier canal B1, un deuxième canal B2 et le canal de communication B3. Sur ces figures, les signaux émis et/ou reçus par les appareils mobiles 28 sont représentés par des rayures horizontales dans le domaine des fréquences.

En fonctionnement, durant la progression du véhicule ferroviaire 10 sur la voie ferrée 17, l'étage de communication 30 communique avec les balises 15 successives.

Si l'antenne de protection 40 capte une onde électrique, le signal électrique capté correspondant à ladite onde électrique est acheminé vers l'étage de protection 35.

L'étage de protection 35 détecte la fréquence du signal capté. L'étage de protection 35 détecte également l'adresse MAC de l'appareil électronique qui a émis l'onde correspondant au signal capté.

Si la fréquence détectée appartient au canal de communication B3, et si l'adresse MAC détectée est différente de l'adresse MAC du module d'émission-réception 50, alors l'étage de protection 35 génère un signal de brouillage radar tel que défini ci-dessus, et dont le spectre est compris dans le canal de communication B3.

Le signal de brouillage est ensuite acheminé vers l'antenne de protection 40. L'antenne de protection 40 rayonne alors au moins une partie du signal de brouillage dans la voiture d'extrémité 60.

Lors de la réception du signal de brouillage, les appareils mobiles 28 cessent de communiquer sur le canal de communication B3, conformément à la norme ETSI EN 301893. En outre, conformément à ladite norme ETSI EN 301893, les appareils mobiles 28 ne peuvent plus utiliser le canal de communication B3 pendant une demi-heure à compter de l'instant de réception du signal de brouillage.

En conséquence, pour communiquer, les appareils mobiles 28 situés dans les voitures d'extrémité 60 peuvent utiliser tout canal de la plage de communication à l'exception du canal de communication B3.

La puissance du signal de brouillage au niveau de l'antenne de communication 55 étant inférieure ou égale à -70 dBm, conformément à la norme ETSI EN 301893, l'étage de communication 30 n'est pas perturbé par le signal de brouillage.

Par conséquent, le canal de communication B3 est uniquement occupé par les données échangées entre l'étage de communication 30 et les balises 15.

Avantageusement, en variante, l'étage de protection 35 est également propre à transmettre, à destination de l'étage de communication 30, des informations relatives au signal de brouillage.

Dans ce cas, lors de la réception, par l'antenne de communication 55, d'un signal radar dont le spectre est compris dans la bande de communication B3, le module d'émission-réception 50 détermine à l'aide des informations reçues en provenance de l'étage de protection 35, si ledit signal de brouillage a été généré par l'étage de protection 35. Si le signal radar capté a été généré par l'étage de protection 35, alors l'étage de communication 30 ignore ledit signal radar et continue de communiquer avec les balises 15 dans la bande de communication B3.

## Revendications

1. Dispositif de communication (5) pour un véhicule ferroviaire (10), comprenant un étage de communication (30) sans fil pour communiquer avec une balise (15) dans un canal de communication (B3) d'une plage spectrale subdivisée en plusieurs canaux prédéterminés (B1, B2, B3),
le véhicule ferroviaire (10) comporte des voitures (27) pour accueillir des passagers, certains desdits passagers utilisant des appareils mobiles de communication (28) propres à fonctionner dans la même plage spectrale que l'étage de communication du dispositif de communication (5),
ledit dispositif de communication (5) étant **caractérisé en ce qu'**il comporte en outre un étage de protection (35) relié à une antenne de protection (40),
l'antenne de protection (40) étant propre à capter des ondes radioélectriques émises et/ou reçues par les appareils mobiles de communication (28), qui se propagent dans au moins une voiture (27, 60) dudit véhicule ferroviaire (10),
l'étage de protection (35) étant propre à détecter la fréquence des ondes radioélectriques captées par l'antenne de protection et, si ladite fréquence appartient au canal de communication (B3), à générer des signaux de brouillage du canal de communication (B3) et à les appliquer à l'antenne de protection,
l'antenne de protection (40) étant en outre propre, à partir desdits signaux de brouillage, à rayonner des ondes radioélectriques de brouillage dans ladite voiture (27, 60), et, lors de la réception du signal de brouillage, les appareils mobiles (28) cessent de communiquer sur le canal de communication (B3) et, pour communiquer, les appareils mobiles (28) peuvent utiliser tout canal de la plage spectrale à l'exception du canal de communication (B3).

2. Dispositif (5) selon la revendication 1, **caractérisé en ce que** les caractéristiques du ou de chaque canal (B1, B2, B3) sont définies par la norme ETSI EN 301893 et/ou une norme IEEE 802.11, de préférence la norme IEEE 802.11a.

3. Dispositif (5) selon la revendication 2, **caractérisé en ce que** ledit dispositif de communication (5) est configuré pour communiquer avec les balises de communication (15) selon un protocole de communication dont les caractéristiques sont définies par l'une des normes IEEE 802.11, de préférence la norme IEEE 802.11a.

4. Dispositif (5) selon l'une quelconque des revendications précédentes, **caractérisé en ce que** les signaux de brouillage sont des signaux radar, par exemple des signaux radar tels que décrits dans la norme ETSI EN 301893.

5. Dispositif (5) selon l'une quelconque des revendications précédentes, **caractérisé en ce que** l'étage de protection (35) est relié à l'étage de communication (30) pour transmettre des informations relatives aux signaux de brouillage générés.

6. Dispositif (5) selon l'une quelconque des revendications précédentes, **caractérisé en ce que** l'étage de protection (35) est propre à déterminer l'adresse MAC de l'appareil (28) ayant émis les ondes captées, et **en ce que** ledit étage de protection (35) est propre à générer des signaux de brouillage si ladite adresse MAC est différente d'une adresse MAC prédéterminée.

7. Dispositif (5) selon l'une quelconque des revendications précédentes, **caractérisé en ce que** l'étage de protection (35) et l'antenne de protection (40) sont adaptés pour que les ondes de brouillage rayonnées par l'antenne de protection (40) présentent une puissance supérieure ou égale à -62 dBm dans la voiture (60).

8. Dispositif (5) selon l'une quelconque des revendications précédentes, **caractérisé en ce que** l'étage de protection (35) et l'antenne de protection (40) sont adaptés pour que les ondes de brouillage rayonnées par l'antenne de protection (40) présentent une puissance inférieure ou égale à -70 dBm au niveau d'une antenne de communication (55) de l'étage de communication (30).

9. Véhicule ferroviaire (10), **caractérisé en ce qu'**il comprend un dispositif de communication (5) selon l'une quelconque des revendications 1 à 8.

10. Véhicule ferroviaire (10) selon la revendication 9, **caractérisé en ce que** l'antenne de protection (40) est propre à rayonner en direction d'au moins une des voitures (60) du véhicule ferroviaire (10) qui sont situées au voisinage de l'implantation de l'étage de communication (30) du dispositif de communication (5) à bord du véhicule ferroviaire (10).

## Patentansprüche

1. Kommunikationsvorrichtung (5) für ein Schienenfahrzeug (10), umfassend eine drahtlose Kommunikationsstufe (30) zur Kommunikation mit einer Bake (15) in einem Kommunikationskanal (B3) eines in mehrere vorbestimmte Kanäle (B1, B2, B3) unterteilten Spektralbereichs,
wobei das Schienenfahrzeug (10) Wagen (27) zum Aufnehmen von Passagieren umfasst, wobei einige der Passagiere mobile Kommunikationsgeräte (28) verwenden, die geeignet sind, um in dem gleichen Spektralbereich wie die Kommunikationsstufe der Kommunikationsvorrichtung (5) betrieben zu werden,
wobei die Kommunikationsvorrichtung (5) **dadurch gekennzeichnet ist, dass** sie ferner eine Schutzstufe (35) umfasst, die mit einer Schutzantenne (40) verbunden ist,
wobei die Schutzantenne (40) geeignet ist, Funkwellen zu erfassen, die von den mobilen Kommunikationsgeräten (28) gesendet und/oder empfangen werden, die sich in mindestens einem Wagen (27, 60) des Schienenfahrzeugs (10) ausbreiten,
wobei die Schutzstufe (35) geeignet ist, die Frequenz der von der Schutzantenne empfangenen Funkwellen zu detektieren und, wenn die Frequenz zu dem Kommunikationskanal (B3) gehört, Störsignale des Kommunikationskanals (B3) zu erzeugen und an die Schutzantenne anzulegen,
wobei die Schutzantenne (40) ferner geeignet ist, um anhand der Störsignale störende Funkwellen in den Wagen (27, 60) zu strahlen, und wobei die mobilen Geräte (28) bei Empfang des Störsignals die Kommunikation auf dem Kommunikationskanal (B3) einstellen und die mobilen Geräte (28) zur Kommunikation jeden Kanal des Spektralbereichs mit Ausnahme des Kommunikationskanals (B3) verwenden können.

2. Vorrichtung (5) nach Anspruch 1, **dadurch gekennzeichnet, dass** die Eigenschaften des oder jedes Kanals (B1, B2, B3) definiert sind durch die Norm ETSI EN 301893 und/oder eine Norm IEEE 802.11, vorzugsweise dNorm IEEE 802.11a.

3. Vorrichtung (5) nach Anspruch 2, **dadurch gekennzeichnet, dass** die Kommunikationsvorrichtung (5) konfiguriert ist, um die Kommunikationsbaken (15) gemäß einem Kommunikationsprotokoll kommuniziert, dessen Eigenschaften definiert sind durch eine der Normen IEEE 802.11, vorzugsweise die Norm IEEE 802.11a.

4. Vorrichtung (5) nach einem der vorherigen Ansprüche, **dadurch gekennzeichnet, dass** die Störsignale Radarsignale sind, zum Beispiel Radarsignale, wie sie in der Norm ETSI EN 301893 beschrieben sind.

5. Vorrichtung (5) nach einem der vorherigen Ansprüche, **dadurch gekennzeichnet, dass** die Schutzstufe (35) mit der Kommunikationsstufe (30) verbunden ist, um Informationen in Bezug auf die erzeugten Störsignale zu übertragen.

6. Vorrichtung (5) nach einem der vorherigen Ansprüche, **dadurch gekennzeichnet, dass** die Schutzstufe (35) geeignet ist, um die MAC-Adresse des Geräts (28) zu bestimmen, das die erfassten Wellen gesendet hat, und die Schutzstufe (35) geeignet ist, um Störsignale zu erzeugen, wenn die MAC-Adresse von einer vorbestimmten MAC-Adresse unterscheidet.

7. Vorrichtung (5) nach einem der vorherigen Ansprüche, **dadurch gekennzeichnet, dass** die Schutzstufe (35) und die Schutzantenne (40) angepasst sind, um die von der Schutzantenne (40) ausgestrahlten Störwellen in dem Wagen (60) eine Leistung größer als oder gleich wie -62 dBm aufweisen.

8. Vorrichtung (5) nach einem der vorherigen Ansprüche, **dadurch gekennzeichnet, dass** die Schutzstufe (35) und die Schutzantenne (40) angepasst sind, um die von der Schutzantenne (40) ausgestrahlten Störwellen an einer Kommunikationsantenne (55) der Kommunikationsstufe (30) eine Leistung kleiner als oder gleich wie -70 dBm aufweisen.

9. Schienenfahrzeug (10), das **dadurch gekennzeichnet ist, dass** es eine Kommunikationsvorrichtung (5) nach einem der Ansprüche 1 bis 8 umfasst.

10. Schienenfahrzeug (10) nach Anspruch 9, **dadurch gekennzeichnet, dass** die Schutzantenne (40) geeignet ist, um in Richtung mindestens eines der Wagen (60) des Schienenfahrzeugs (10) zu strahlen, die sich in der Nähe der Installation der Kommunikationsstufe (30) der Kommunikationsvorrichtung (5) an Bord des Schienenfahrzeugs (10) befinden.

## Claims

1. A communication device (5) for a rail vehicle (10), comprising a wireless communication stage (30) for communicating with a beacon (15) in a communication channel (B3) of a spectral range subdivided into several predetermined channels (B1, B2, B3),
the rail vehicle (10) has cars (27) for accommodating passengers, some of said passengers using mobile communication devices (28) capable of operating in the same spectral range as the communication stage of the communication device (5),
said wireless communication device (5) being **characterized in that** it also includes a protection stage (35) connected to a protection antenna (40),
the protection antenna (40) capturing radio waves transmitted and/or received by the mobile communication devices (28), which propagate in at least one car (27, 60) of said rail vehicle (10),
the protection stage (35) being capable of detecting the frequency of the radio waves captured by the protection antenna and, if said frequency belongs to the communication channel (B3), generating interference signals on the communication channel (B3) and applying them to the protection antenna,
the protection antenna (40) being further capable, from the interference signals, of radiating interference radio waves in said car (27, 60), and, upon receipt of the interference signals, the mobile devices (28) cease to communicate on the communication channel (B3) and, for communication, the mobile devices (28) may use any channel in the spectral range except the communication channel (B3).

2. The device (5) according to claim 1, **characterized in that** the characteristics of the or each channel (B1, B2, B3) are defined by the standard ETSI EN 301893 and/or one standard of the standards IEEE 802.11, preferably the standard IEEE 802.11a.

3. The device (5) according to claim 2, **characterized in that** said wireless communication device (5) is configured to communicate with communication beacons (15) according to a communication protocol whose characteristics are defined by one standard of standards IEEE 822.11, preferably the standard IEEE 802.11a.

4. The device (5) according to any one of the preceding claims, **characterized in that** the interference signals are radar signals, for example radar signals according to the standard ETSI EN 301893.

5. The device (5) according to any one of the preceding claims, **characterized in that** the protection stage (35) is connected to the communication stage (30) to send information relative to the interference signals generated.

6. The device (5) according to any one of the preceding claims, **characterized in that** the protection stage (35) determines the MAC address of the device (28) having emitted the waves captured, and **in that** said protection stage (35) generates interference signals when said MAC address is different from a predetermined MAC address.

7. The device according to any one of the preceding claims, **characterized in that** the protection stage (35) and the protection antenna (40) are adapted so that the interference waves radiated by the protection antenna (40) have a power greater than or equal to -62 dBm in the car (60).

8. The device (5) according to any one of the preceding claims, **characterized in that** the protection stage (35) and the protection antenna (40) are protected so that the interference waves radiated by the protection antenna (40) have a power less than or equal to -70 dBm at a communication antenna (55) of the communication stage (30).

9. A rail vehicle (10), **characterized in that** it comprises a communication device (5) according to any one of claims 1 to 8.

10. The rail vehicle (10) according to claim 9, **characterized in that** the protection antenna (40) is able to radiate toward at least one of the cars (60) of the rail vehicle (10) that are situated near the installation of the communication stage (30) of the communication device (5) on board the rail vehicle (10).
